# EUROPEAN PATENT SPECIFICATION

(11) **EP 2 679 552 B1**
(45) Date of publication and mention of the grant of the patent: **01.08.2018**
(21) Application number: 12748827.8
(22) Date of filing: 20.02.2012
(51) Int. Cl.: C03B 40/02, C03C 17/00, C03C 23/00, B01J 23/22, C03B 40/04

(54) **USE OF A DEVICE FOR FORMING GLASS SURFACE LUBRICATING LAYER**
NUTZUNG EINER VORRICHTUNG ZUR ERZEUGUNG EINER GLEITSCHICHT AUF EINER GLASOBERFLÄCHE
UTILISATION D'UN DISPOSITIF POUR FORMER UNE COUCHE DE LUBRIFICATION SUR UNE SURFACE DE VERRE

(30) Priority: 21.02.2011 KR 20110015039; 26.04.2011 KR 20110039031; 20.02.2012 KR 20120017150
(43) Date of publication of application: 01.01.2014
(73) Proprietor: LG Chem, Ltd., Seoul 150-721 (KR)
(72) Inventor: KIM, Han-Kook, Daejeon 302-752 (KR); MIN, Kyoung-Hoon, Daejeon 305-380 (KR); BANG, Jung-Sik, Daejeon 305-741 (KR); HA, Duk-Sik, Daejeon 305-380 (KR); HWANG, Du-Sun, Seoul 120-130 (KR)
(74) Representative: Goddar, Heinz J.
(86) International application number: PCT/KR2012/001274
(87) International publication number: WO 2012/115416

(56) References cited:
- FR-A1- 2 515 633
- GB-A- 2 206 878
- US-A- 3 451 796
- US-A- 5 093 196
- US-A- 5 093 196
- US-A- 5 643 349
- US-A- 5 707 412
- US-B2- 7 740 827
- MAMORU AI: "The Oxidation Activity and Acid-base Properties of V2O5-K2SO4-H2SO4 Catalysts", BULLETIN OF THE JAPAN PETROLEUM INSTITUTE, vol. 18, no. 1, 1976, pages 50-54, XP002734864, DOI: 10.1627/jpi1959.18.50

## Description

### TECHNICAL FIELD

This application claims priority to Korean Patent Application No. 10-2011-0015039 filed on February 21, 2011, Korean Patent Application No. 10-2011-0039031 filed on April 26, 2011, and Korean Patent Application No. 10-2012-0017150 filed on February 20, 2012, in the Republic of Korea. The present disclosure relates to a glass manufacturing technique, and more particularly, to an apparatus for forming a lubricant layer on the surface of a glass and an annealing furnace and a glass manufacturing apparatus including the same, which may prevent scratches from occurring at the surface of a glass and decrease corrosion of glass manufacturing equipment.

### BACKGROUND ART

US 5,093,196 A discloses a dealkalized sheet glass and a product comprising the same.

GB 2,206,878 A discloses a pyrolytically coated sheet glass and a process of manufacturing the same.

Many kinds of flat glasses are being used in various fields like window panes, window screens of vehicles and mirrors. Such a flat glass may be manufactured in various ways. Among them, a representative method is a production method using a float process. For example, thin glass planes or glass films for TFT displays are frequently manufactured by the float process. The glass manufactured by the float process is called a float glass.

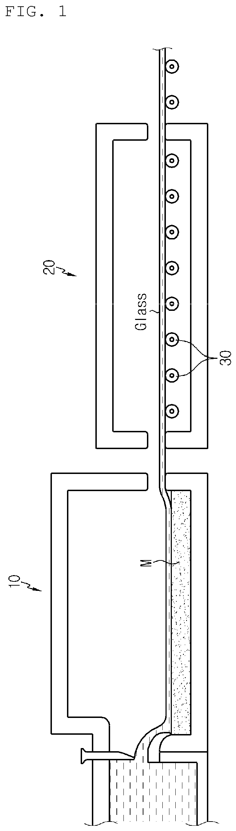

FIG. 1 is a schematic diagram showing a system for manufacturing a float glass.

As shown in FIG. 1, a glass is generally formed from a molten glass by using a float bath 10 where a molten metal M such as molten tin or molten tin alloy is stored and flows. At this time, a molten glass having a lower viscosity than the molten metal M and lighter than the molten metal M by about 2/3 is successively supplied into the float bath 10 through an inlet of the float bath 10. The molten glass moves to the downstream of the float bath 10 while floating and spreading on the molten metal M. In this process, the molten glass nearly reaches an equivalent thickness according to its surface tension and gravity to form a glass strip or ribbon which is solidified to some extent.

In addition, the molten glass ribbon formed as above is transferred from the float bath 10 to an annealing furnace 20 and experiences an annealing process. In the annealing process, the glass is transferred from an inlet to an outlet of the annealing furnace 20 by transfer means such as a roller 30 or a belt. In addition, after the annealing process, the glass may also be carried by the transfer means such as the roller 30.

While the glass is transferred in the annealing process or after the annealing process, the lower surface of the glass may come into contact with the transfer means such as the roller 30. At this time, due to the transfer means such as the roller 30, flows, cracks or scratches may occur at the lower surface of the glass. Particularly, if the above equipment is used continuously, impurities or glass fractures may be attached to the transfer means such as the roller 30. In this case, scratches may occur more easily at the lower surface of the glass.

If scratches occur at the lower surface of the glass during a glass transferring process using the roller 30 or the lime, the quality and yield of glass greatly deteriorate. Therefore, efforts are being made to prevent scratches from occurring at the lower surface of a glass during the glass transferring process, particularly in the annealing furnace 20, or during a process of transferring a glass after the annealing process.

Among them, a representative technique is to supply SO₂ gas to the lower surface of a glass at an initial stage of the glass annealing process or before the glass annealing process. If the SO₂ gas is sprayed to the lower surface of a glass as described above, the SO₂ gas reacts with alkali components of the glass, particularly sodium components, to form sulphate such as Na₂SO₄. In addition, the formed sulphate serves as a lubricant layer since its film strength is higher than that of a glass, thereby preventing scratches from occurring at the lower surface of the glass by the transfer means such as the roller 30 and improving the scratch resistance of the glass.

However, in case of a non-alkali glass substantially not containing an alkali component such as sodium, like a glass for LCD, even though SO₂ gas is supplied, a sulphate lubricant layer is not easily formed by an alkali metal such as Na₂SO₄. The SO₂ gas should react with components such as alkali earth metal like calcium in the glass to form a sulphate lubricant layer such as CaSO₄, but the SO₂ gas does not easily react with alkali earth metals or the like in comparison to alkali metals such as sodium. Therefore, in order to form a lubricant layer such as CaSO₄, an excessive amount of SO₂ gas should be used. However, if a lot of SO₂ gas is used, the production cost may increase accordingly. In addition, the toxicity of the SO₂ gas may act as a source of environmental pollution and cause serious harm to worker health.

Moreover, since manufacturing equipment or instruments such as the annealing furnace 20 may be easily corroded due to SO₂ gas, the productivity and process efficiency when manufacturing glasses may be adversely affected. For this reason, the SO₂ gas should be used as little as possible. However, in the conventional technique, an excessive amount of SO₂ gas should be inevitably used to form a lubricant layer for preventing scratches from occurring at the lower surface of a glass.

### DISCLOSURE

### Technical Problem

The present disclosure is designed to solve the problems of the prior art, and therefore it is an object of the present disclosure to provide an apparatus for forming a lubricant layer on the surface of a glass, which may use a small amount of SO₂ gas and effectively prevent scratches from occurring at the surface of the glass; an annealing furnace including the same; and a glass manufacturing apparatus including the same.

Other objects and advantages of the present disclosure will be understood by the following description and become more apparent from the embodiments of the present disclosure, which are set forth herein. It will also be apparent that objects and advantages of the present disclosure can be embodied easily by the means defined in claims and combinations thereof.

### Technical Solution

The above problems are solved in accordance with the subject-matter of the independent claims. Preferred embodiments result from the subclaims.

In order to accomplish the above object, the present disclosure provides a use of an apparatus for forming a lubricant layer on the surface of a non-alkali glass, the apparatus comprising:
a SO₂ supply unit for supplying SO₂ gas;
a O₂ supply unit for supplying O₂ gas;
a catalyst retaining unit for retaining a SO₂ gas oxidation catalyst, the catalyst retaining unit receiving SO₂ gas and O₂ gas from the SO₂ supply unit and the O₂ supply unit to generate SO₃ gas and supplying the generated SO₃ gas to the non-alkali glass and forming a CaSO₄ lubricant layer at the surface of the non-alkali glass, the catalyst retaining unit having a cylindrical shape with an inlet and an outlet and retaining the SO₂ gas oxidation catalyst therein so that SO₂ gas and O₂ gas flow into the catalyst retaining unit through the inlet and SO₃ gas flows out of the catalyst retaining unit through the outlet; and
wherein a filter is provided to the outlet of the catalyst retaining unit so that the SO₂ gas oxidation catalyst does not pass therethrough,
wherein the SO₂ gas oxidation catalyst is retained in the catalyst retaining unit in at least one form of a pellet form and a powder form.

Preferably, the SO₂ gas oxidation catalyst includes V₂O₅.

The catalyst retaining unit has a cylindrical shape with an inlet and an outlet and retains the SO₂ gas oxidation catalyst therein, SO₂ gas and O₂ gas flow into the catalyst retaining unit through the inlet, and SO₃ gas flows out of the catalyst retaining unit through the outlet.

Also preferably, the catalyst retaining unit has a structural shape containing the SO₂ gas oxidation catalyst as a component.

In another aspect, the present disclosure also provides a use wherein the SO₂ gas oxidation catalyst includes at least one of V₂O₅, Fe₂O₃, CuO, TiO₂, Cr₂O₃, SiO₂, CaO, Al₂O₃ and WO₃.

In another aspect, the present disclosure also provides a use wherein the catalyst retaining unit further retains at least one of K₂O, K₂SO₄ and K₂S₂O₇.

### Advantageous Effects

According to the present disclosure, since a lubricant layer is easily formed at the surface of a glass, particularly the lower surface of the glass which directly contacts transfer means such as a roller, the scratch resistance of the glass may be improved. Therefore, when the glass is transferred by the transfer means such as a roller and a belt during a manufacturing process such as a glass annealing process, it is possible to effectively prevent flaws, cracks or scratches from occurring at the lower surface of the glass. Therefore, a defect rate may be lowered during the glass manufacturing process and a high-quality glass may be obtained. In addition, since scratches at the glass decrease, time and costs required for polishing the glass may be reduced.

Further, according to the present disclosure, a sulphate lubricant layer may be sufficiently formed at the surface of a glass by using a small amount of SO₂ gas. Therefore, it is possible to suppress SO₂ gas with strong toxicity causing environmental pollution and bringing harmful working conditions to a worker who forms the lubricant layer. In addition, the SO₂ gas may be more simply purchased and treated at low costs. Moreover, it is possible to suppress that glass manufacturing equipment or instruments such as an annealing furnace from being corroded by the SO₂ gas, which may extend the life span of the glass manufacturing equipment or instruments.

Particularly, in case of a non-alkali glass substantially not containing an alkali metal such as sodium, like a glass for LCD, a sulphate lubricant layer may be sufficiently formed by using a relatively small amount of SO₂ gas.

In addition, since the time required for forming the sulphate lubricant layer is shortened, the time required for the entire glass manufacturing process may be shortened and the production cost may be reduced.

### DESCRIPTION OF DRAWINGS

Other objects and aspects of the present disclosure will become apparent from the following descriptions of the embodiments with reference to the accompanying drawings in which:
FIG. 1 is a schematic diagram showing a system for manufacturing a float glass;
FIG. 2 is a block diagram schematically showing a functional configuration of an apparatus for forming a lubricant layer on the surface of a glass according to a preferred embodiment of the present disclosure;
FIG. 3 is a cross-sectional view schematically showing an apparatus for forming a lubricant layer on the surface of a glass, which includes a cylindrical catalyst retaining unit, according to an embodiment of the present disclosure, in relation to an annealing furnace;
FIG. 4 is a cross-sectional view schematically showing an apparatus for forming a lubricant layer on the surface of a glass, which includes a cylindrical catalyst retaining unit, according to another embodiment of the present disclosure, in relation to an annealing furnace;
FIG. 5 is a cross-sectional view schematically showing an apparatus for forming a lubricant layer on the surface of a glass, which includes a cylindrical catalyst retaining unit, according to still another embodiment of the present disclosure, in relation to an annealing furnace;
FIG. 6 is a cross-sectional view schematically showing an apparatus for forming a lubricant layer on the surface of a glass, which includes a structural catalyst retaining unit, according to another further embodiment of the present disclosure, in relation to an annealing furnace;
FIG. 7 is a schematic diagram showing a device for supplying SO₂ gas and a SO₂ gas oxidation catalyst to a glass plate to cause an oxidation reaction of the SO₂ gas at the surface of the glass plate according to an embodiment of the present disclosure;
FIG. 8 is a diagram showing rates of forming a sulphate lubricant layer at a glass plate in an annealing furnace with different colors in a case where SO₃ gas is supplied to the annealing furnace by the apparatus for forming a lubricant layer on the surface of a glass according to an embodiment of the present disclosure; and
FIG. 9 is a diagram showing rates of forming a sulphate lubricant layer at a glass plate in an annealing furnace with different colors in a case where SO₃ gas is supplied directly to the annealing furnace according to a comparative example of the present disclosure.

### BEST MODE

Hereinafter, preferred embodiments of the present disclosure will be described in detail with reference to the accompanying drawings.

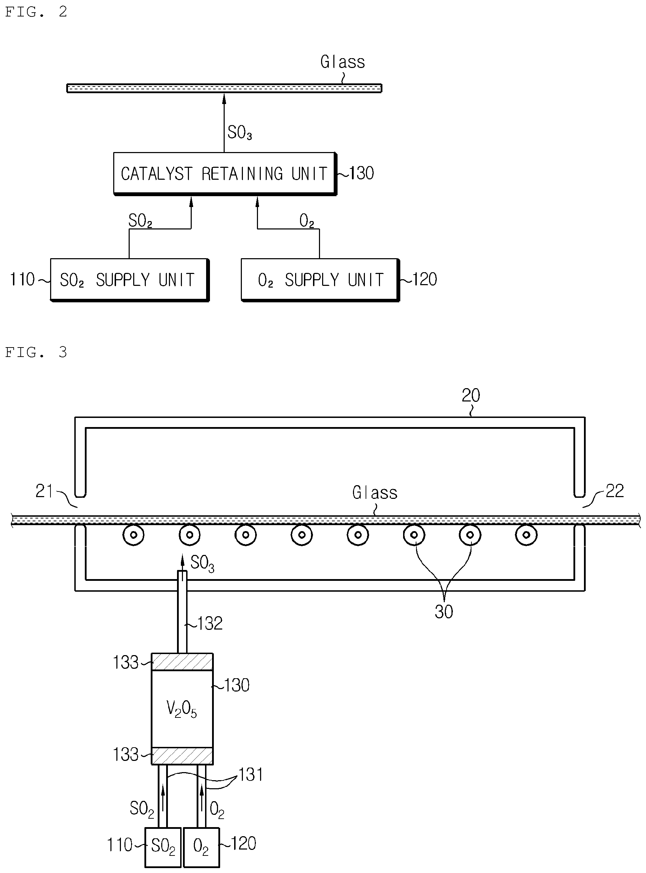

FIG. 2 is a block diagram schematically showing a functional configuration of an apparatus for forming a lubricant layer on the surface of a glass according to a preferred embodiment of the present disclosure.

Referring to FIG. 2, the apparatus for forming a lubricant layer on the surface of a glass according to the present disclosure includes a SO₂ supply unit 110, an O₂ supply unit 120 and a catalyst retaining unit 130.

The SO₂ supply unit 110 and the O₂ supply unit 120 supply SO₂ gas and O₂ gas to the catalyst retaining unit 130, respectively. The SO₂ gas supplied by the SO₂ supply unit 110 reacts with the O₂ gas supplied by the O₂ supply unit 120 at the catalyst retaining unit 130 to generate SO₃ gas. In other words, under an oxidation circumstance where oxygen is present, the SO₂ gas reacts with oxygen and is oxidized into SO₃ gas as shown in Formula 1 below.

Formula 1 SO₂(g) + 1/2×O₂(g) → SO₃(g)

Meanwhile, the O₂ supply unit 120 may supply O₂ gas in various forms. For example, the O₂ supply unit 120 may supply pure O₂ gas or air so that the O₂ gas may be supplied to the catalyst retaining unit 130. In addition, the O₂ supply unit 120 may supply moisture to the catalyst retaining unit 130. In other words, the oxygen for oxidizing SO₂ gas may be supplied in various forms so that the oxidation of SO₂ gas may be activated.

Preferably, the SO₂ supply unit 110 may supply SO₂ gas at a flow rate of 0.05 Nm³/Hr to 10 Nm³/Hr. In addition, the O₂ supply unit 120 may supply O₂ gas at a flow rate of 0.05 Nm³/Hr to 10 Nm³/Hr. If the O₂ supply unit 120 supplies air so that the O₂ gas is supplied, the air may be supplied at a flow rate of 0.5 Nm³/Hr to 20 Nm³/Hr.

The SO₂ supply unit 110 may supply SO₂ gas at a flow rate of 0.05 Nm³/Hr to 7 Nm³/Hr. In other case, the SO₂ supply unit 110 may supply SO₂ gas at a flow rate of 3 Nm³/Hr to 10 Nm³/Hr. In addition, the O₂ supply unit 120 may supply O₂ gas at a flow rate of 0.05 Nm³/Hr to 7 Nm³/Hr. In other case, the O₂ supply unit 120 may supply O₂ gas at a flow rate of 3 Nm³/Hr to 10 Nm³/Hr.

In a case where the SO₂ gas and the O₂ gas are supplied at the above rates, the reaction of SO₂ gas and O₂ gas is activated, and so the SO₂ gas may be oxidized more actively into SO₃ gas. However, the supplying rate of SO₂ gas and O₂ gas may be changed in various ways according to various general conditions, and the present disclosure is not limited to the above rates. For example, the SO₂ supply unit 110 may supply SO₂ gas at a flow rate lower than 0.05 Nm³/Hr or higher than 10 Nm³/Hr. In addition, the O₂ supply unit 120 may supply O₂ gas at a flow rate lower than 0.05 Nm³/Hr or higher than 10 Nm³/Hr.

As described above, the catalyst retaining unit 130 receives SO₂ gas and O₂ gas from the SO₂ supply unit 110 and the O₂ supply unit 120 and allows SO₃ gas to be generated by the reaction of SO₂ gas and O₂ gas. In addition, the catalyst retaining unit 130 supplies the generated SO₃ gas to the surface of a glass.

The SO₃ gas supplied by the catalyst retaining unit 130 as described above may react with a certain component of the glass and generate sulphate near the surface of the glass. In addition, the sulphate may serve as a lubricant layer at the surface of the glass. Particularly, in case of a non-alkali glass, the SO₃ gas generated and supplied by the catalyst retaining unit 130 may react with a component such as calcium contained in the glass as shown in Formula 2 below to form a sulphate lubricant layer.

Formula 2 SO₃(g) + CaO(s) → CaSO₄(S)

Even though Formula 2 shows only the process where SO₂ gas reacts with calcium oxide in the glass to form a CaSO₄ lubricant layer, the SO₂ gas may also react with another component of the glass to form a lubricant layer by another kind of sulphate. For example, the SO₂ gas may react with MgO or Cr₂O₃ of the glass to form a sulphate lubricant layer such as MgSO₄ and Cr₂(SO₄)₃. Since the SO₃ gas supplied to the glass as described above reacts with a certain component of the glass and forms a lubricant layer at the surface by sulphate, it is possible to prevent flaws, cracks or scratches from occurring at the surface of the glass.

Preferably, the catalyst retaining unit 130 according to the present disclosure may supply SO₃ gas at a flow rate of 0.05 Nm³/Hr to 10 Nm³/Hr. In a case where the SO₃ gas is supplied at the above rate, a lubricant layer may be formed more actively at the lower surface of the glass. The catalyst retaining unit 130 may supply SO₃ gas at a flow rate of 0.05 Nm³/Hr to 7 Nm³/Hr. In other case, the catalyst retaining unit 130 may supply SO₃ gas at a flow rate of 3 Nm³/Hr to 10 Nm³/Hr. However, the SO₃ gas supplying rate of the catalyst retaining unit 130 may be changed in various ways according to various conditions such as a glass size or a shape of the apparatus for forming a lubricant layer on the surface of a glass, and the present disclosure is not limited to the above rate range.

Particularly, the catalyst retaining unit 130 according to the present disclosure retains a SO₂ gas oxidation catalyst. Here, the SO₂ gas oxidation catalyst represents a catalyst which may promote a chemical reaction of Formula 1 where SO₂ gas is oxidized into SO₃ gas.

Since the catalyst retaining unit 130 retains the SO₂ gas oxidation catalyst as described above, the catalyst retaining unit 130 promotes an oxidation reaction of SO₂ gas into SO₃ gas. In addition, as SO₂ gas is oxidized into SO₃ gas more and more, the sulphate lubricant layer, namely the CaSO₄ lubricant layer of Formula 2, may also be formed more and more by SO₃ gas. Therefore, according to the present disclosure, the sulphate lubricant layer such as CaSO₄ may be sufficiently formed at the surface of the glass by using just a small amount of SO₂ gas.

Preferably, the SO₂ gas oxidation catalyst may include V₂O₅. In other words, the catalyst retaining unit 130 may retain vanadium pentoxide as a part or all of the SO₂ gas oxidation catalyst. Such vanadium pentoxide is a representative SO₂ gas oxidation catalyst which promotes the oxidation reaction of SO₂ gas into SO₃ gas. Since V₂O₅ has good resistance against catalyst inactivation of SO₂ gas, V₂O₅ is a good SO₂ gas oxidation catalyst in the present disclosure.

In addition, various kinds of SO₂ gas oxidation catalysts may also be used in addition to V₂O₅. For example, Fe₂O₃, CuO, TiO₂, Cr₂O₃, SiO₂, CaO, Al₂O₃, WO₃ or the like may be used as the SO₂ gas oxidation catalyst, and at least two of them may be combined and used. As described above, the SO₂ gas oxidation catalyst is not limited to specific kinds and may promote the oxidation of SO₂ gas into SO₃ gas.

Moreover, the SO₂ gas oxidation catalyst may be used together with another material which enhances catalyst activation. For example, V₂O₅ may be used together with K₂O, K₂SO₄, K₂S₂O₇ or the like, which enhances catalyst activation of V₂O₅. Therefore, the catalyst retaining unit 130 may further retain at least one of K₂O, K₂SO₄ and K₂S₂O₇ in addition to V₂O₅. At this time, K₂O, K₂SO₄ or K₂S₂O₇ may be retained in the catalyst retaining unit 130 in various forms. For example, K₂O, K₂SO₄ or K₂S₂O₇ may be received in the catalyst retaining unit 130 in advance together with V₂O₅ or may be supplied afterwards separately from V₂O₅.

As described above, according to the present disclosure, when the SO₂ gas is oxidized into SO₃ gas under an oxidation environment, the SO₂ gas oxidation catalyst activates the oxidation of SO₂ gas, and so a lubricant layer may be sufficiently formed at the surface of the glass by sulphate. Particularly, in case of a non-alkali glass substantially not containing alkali ions such as sodium, the lubricant layer may not be easily formed in comparison to the alkali glass. However, according to the present disclosure, since the oxidation reaction of SO₂ gas as shown in Formula 1 may be promoted by means of the SO₂ gas oxidation catalyst, in a non-alkali glass, a lubricant layer may be rapidly and sufficiently formed by means of sulphate by using a small amount of SO₂ gas.

Even though the above embodiments have been illustrated based on the case where the present disclosure is applied to a non-alkali glass, it does not mean that the present disclosure must be applied to a non-alkali glass. In other words, the present disclosure may also be applied to an alkali glass, and in case of an alkali glass, the formation of alkali metal sulphate such as Na₂SO₄ may be promoted. Therefore, in this case, a lubricant layer may also be sufficiently formed by using a small amount of SO₂ gas.

FIG. 3 is a cross-sectional view showing the apparatus for forming a lubricant layer on the surface of a glass, which includes a cylindrical catalyst retaining unit 130 according to an embodiment of the present disclosure, in relation to the annealing furnace 20.

Referring to FIG. 3, the glass formeded in a forming process experiences an annealing process in the annealing furnace 20. Here, the glass may be formed in various ways, and the present disclosure is not limited to a specific glass forming way. For example, a glass may be formed by a float process. In other words, a glass may be formed by supplying a molten glass to a float bath 10 storing a molten metal M and then floating or spreading the glass on the molten metal M as shown in FIG. 1. At this time, the thickness of a glass ribbon may be adjusted by controlling or changing the amount of glass put through the inlet of the float bath 10 or forming means such as a top roller installed in the float bath. This float glass manufacturing method includes cyclic successive processes and may operate constantly without a cessation, which allows flat glasses to be manufactured for several years without a pause. This is very suitable as a glass forming way. The present disclosure may be used for forming a lubricant layer on the surface of a glass formed by various glass forming methods such as a float process.

The glass formed in a float bath or the like as described above is put into the inlet 21 of the annealing furnace and is then annealed while being transferred toward the outlet 22 of the annealing furnace by at least one roller 30 provided at the annealing furnace 20. At this time, the inlet 21 of the annealing furnace may have a temperature of about 700 to 800°C, and the outlet 22 of the annealing furnace may have a temperature of about 200 to 300°C.

As described above, the apparatus for forming a lubricant layer on the surface of a glass according to the present disclosure includes the SO₂ supply unit 110, the O₂ supply unit 120 and the catalyst retaining unit 130. Particularly, the catalyst retaining unit 130 may have a cylindrical shape with an inlet 131 and an outlet 132 as shown in FIG. 3. Here, the cylindrical shape means a shape with a hollow, and its section is not limited to a circular shape. For example, the cylindrical catalyst retaining unit 130 may be implemented in various shapes such as cylindrical, hexagonal and octagonal shapes.

Since the cylindrical catalyst retaining unit 130 has a hollow space as described above, SO₂ gas and O₂ gas may react to generate SO₃ gas. Particularly, since the catalyst retaining unit 130 according to the present disclosure retains the SO₂ gas oxidation catalyst such as V₂O₅, it is possible to further promote that SO₂ gas is oxidized in the catalyst retaining unit 130 to generate SO₃ gas. Therefore, a sufficient amount of SO₃ gas may be supplied to the surface of the glass, and so sulphate may be formed more actively at the lower surface of the glass by the SO₃ gas. Therefore, according to this embodiment, the lubricant layer is sufficiently formed at the lower surface of the glass by the sulphate, thereby preventing scratches from occurring at the lower surface of the glass due to transfer means such as the roller 30 located in the annealing furnace 20 and a roller provided at a process after the annealing furnace 20.

Meanwhile, since the inlet 131 and the outlet 132 are provided at the cylindrical catalyst retaining unit 130, SO₂ gas and O₂ gas may flow into the cylindrical catalyst retaining unit 130 through the inlet 131 and the SO₃ gas generated in the cylindrical catalyst retaining unit 130 may flow out through the outlet 132. Even though FIG. 3 illustrates that the cylindrical catalyst retaining unit 130 has two inlets 131 and one outlet 132, respectively, it is just an example, and the number of inlet 131 and the number of outlet 132 may be variously selected in the catalyst retaining unit 130.

As shown in FIG. 3, the catalyst retaining unit 130 may be located out of the annealing furnace 20 of the glass manufacturing apparatus. At this time, the outlet 132 of the catalyst retaining unit 130 connected to the inside of the annealing furnace 20 so that SO₃ gas may be supplied to the glass in the annealing furnace 20 through the outlet 132.

The SO₂ gas oxidation catalyst may have a pellet form, a powder form or their combinations in the catalyst retaining unit 130. For example, V₂O₅ in a powder form or a pellet form such as rings or cylinders may be received in the catalyst retaining unit 130. In a case where the SO₂ gas oxidation catalyst is included in a pellet form or a powder form, the reaction area increases and the oxidation reaction of the SO₂ gas may be performed more actively. However, the present disclosure is not limited to a specific form or state of the SO₂ gas oxidation catalyst and the SO₂ gas oxidation catalyst may be implemented in various forms or states if it may promote oxidation of SO₂ gas.

Preferably, as shown in FIG. 3, the catalyst retaining unit 130 may include a filter 133 in at least one of the inlet 131 and the outlet 132. Here, the filter 133 filters the SO₂ gas oxidation catalyst and prevents the SO₂ gas oxidation catalyst such as V₂O₅ from leaking out from the inside of the catalyst retaining unit 130. Particularly, in a case where the SO₂ gas oxidation catalyst flows from the inside of the catalyst retaining unit 130 to the annealing furnace 20 and is attached to the surface of a glass, the glass quality may be deteriorated. However, if the filter 133 is provided to the inlet 131 and the outlet 132 of the catalyst retaining unit 130 as in this embodiment, this problem may be prevented.

Also preferably, the catalyst retaining unit 130 may be heated to a predetermined temperature. The reaction of SO₂ gas and O₂ gas as shown in Formula 1 may be performed actively at a predetermined temperature, for example about 500°C. Therefore, heat may be applied to the catalyst retaining unit 130 from the outside to reach a temperature at which the oxidation reaction of SO₂ gas is activated, thereby promoting the formation of a lubricant layer at the surface of the glass by SO₃ gas. Preferably, the catalyst retaining unit 130 may be heated to a temperature of 300°C to 700°C. More preferably, the catalyst retaining unit 130 may be heated to a temperature of 450°C to 650°C.

In addition, the SO₂ gas and the O₂ gas may be supplied in a heated state to the catalyst retaining unit 130 so that the SO₂ gas may be actively oxidized. For example, SO₂ gas and O₂ gas may be heated in the SO₂ supply unit 110 and the O₂ supply unit 120 or may be heated while being transferred from the SO₂ supply unit 110 and the O₂ supply unit 120 to the catalyst retaining unit 130.

Meanwhile, the SO₃ gas flowing out from the outlet 132 of the catalyst retaining unit 130 is preferably kept over a predetermined temperature. SO₃ gas may be converted into a liquid state at a normal temperature, and in this case, the SO₃ gas generated at the catalyst retaining unit 130 may be adsorbed to a SO₃ supply tube or the like while being supplied to a glass into the annealing furnace 20. In addition, SO₃ liquid may corrode glass manufacturing equipment made of SUS or the like. Therefore, the SO₃ gas flowing out from the catalyst retaining unit 130 is maintained over a predetermined temperature as described above so that the SO₃ gas is not liquefied, thereby preventing the above problem.

In order to maintain the SO₃ gas flowing from the catalyst retaining unit 130 over a predetermined temperature, various methods may be used. For example, a separate heating device may be provided to a SO₃ supply tube extending from the outlet 132 of the catalyst retaining unit 130 to the annealing furnace 20 to heat SO₃ gas. In other case, an insulator may be provided to the outside of the SO₃ supply tube so that the heat of SO₃ gas generated from the catalyst retaining unit 130 is not emitted out, thereby maintaining the SO₃ gas over a predetermined temperature.

Meanwhile, even though FIG. 3 illustrates that a single catalyst retaining unit 130 is provided, it is just an example, and the present disclosure is not limited to the number of the catalyst retaining unit 130.

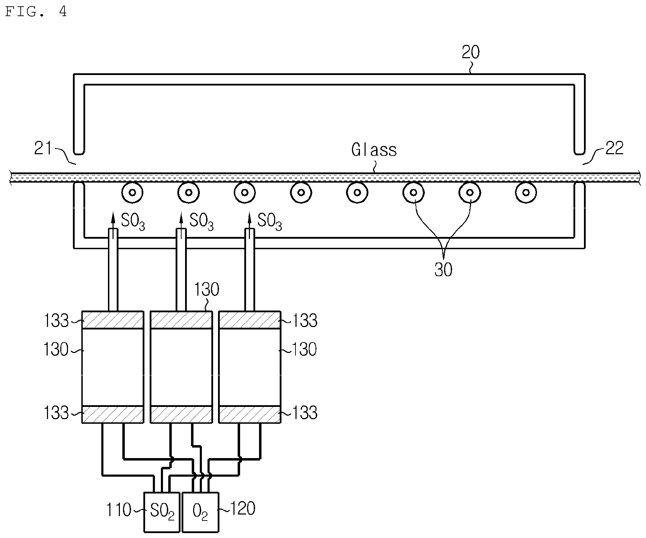

FIG. 4 is a cross-sectional view showing an apparatus for forming a lubricant layer on the surface of a glass, which includes a plurality of cylindrical catalyst retaining units 130, according to another embodiment of the present disclosure, in relation to the annealing furnace 20.

Referring to FIG. 4, the apparatus for forming a lubricant layer on the surface of a glass includes three catalyst retaining units 130. In addition, the outlet 132 of each of three catalyst retaining units 130 is connected to the inside of the annealing furnace 20 to supply the SO₃ gas generated therein to a glass in the annealing furnace 20. As described above, the apparatus for forming a lubricant layer on the surface of a glass may include a plurality of catalyst retaining units 130, and at this time, SO₂ gas oxidation catalysts retained in at least two catalyst retaining units 130 may be different from each other in their kinds. For example, in the embodiment of FIG. 4, SO₂ gas oxidation catalysts retained in three catalyst retaining units 130 may be V₂O₅, Fe₂O₃ and CuO, which are different from each other. In this embodiment, since various kinds of SO₂ gas oxidation catalysts are used in a single apparatus for forming a lubricant layer on the surface of a glass, the effect may be improved.

In addition, even though FIG. 3 illustrates that the catalyst retaining unit 130 is located at the outside of the annealing furnace 20, the catalyst retaining unit 130 may also be located at the inside of the annealing furnace 20.

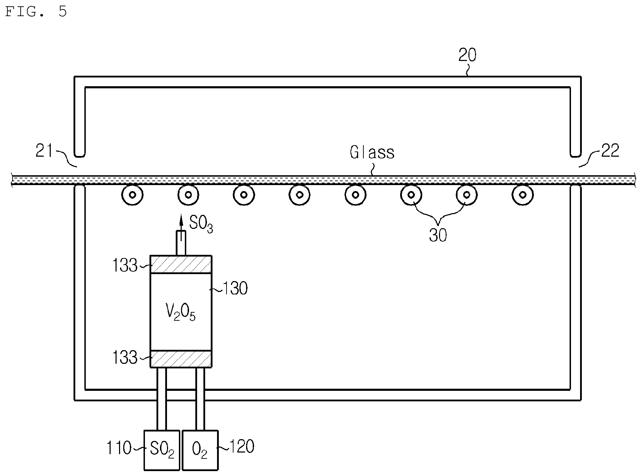

FIG. 5 is a cross-sectional view schematically showing an apparatus for forming a lubricant layer on the surface of a glass, which includes a cylindrical catalyst retaining unit 130, according to still another embodiment of the present disclosure, in relation to the annealing furnace 20.

Referring to FIG. 5, the catalyst retaining unit 130 employed in the apparatus for forming a lubricant layer on the surface of a glass may be located at the inside of the annealing furnace 20 of the glass manufacturing apparatus. In a case where the catalyst retaining unit 130 is provided in the annealing furnace 20 as described above, the volume of an annealing furnace 20 or a glass manufacturing apparatus, which includes the apparatus for forming a lubricant layer on the surface of a glass according to the present disclosure, may be reduced. In addition, in this embodiment, due to the internal temperature of the annealing furnace 20, heat may be constantly applied to the catalyst retaining unit 130 so that SO₂ gas may be actively oxidized. In addition, since the internal heat of the annealing furnace 20 is also applied to the SO₃ gas generated by the catalyst retaining unit 130, it is possible to prevent the SO₃ gas from being liquefied.

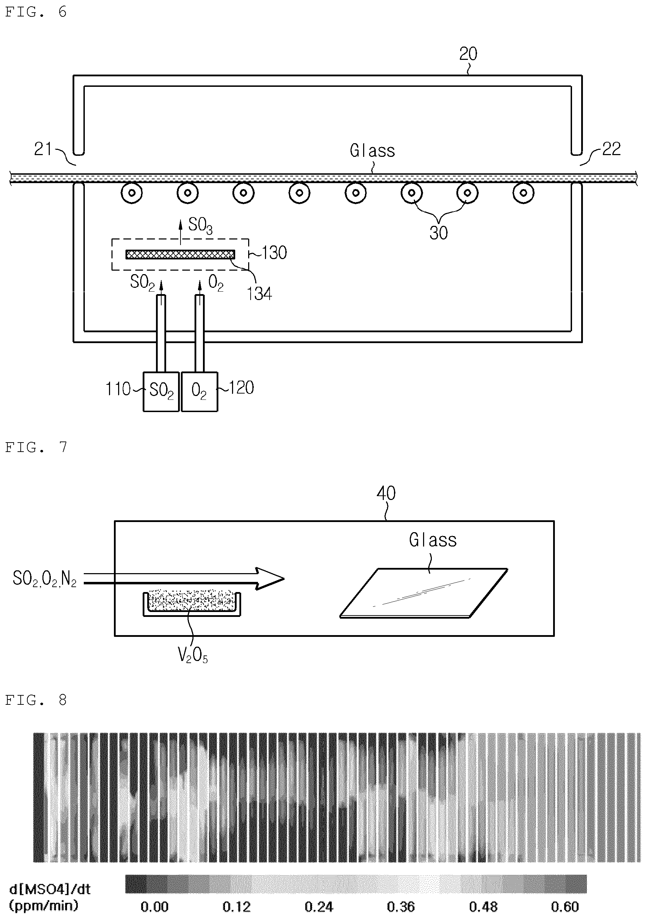

FIG. 6 is a cross-sectional view schematically showing an apparatus for forming a lubricant layer on the surface of a glass, which includes the structural catalyst retaining unit 130, according to another further embodiment of the present disclosure, in relation to the annealing furnace 20.

Referring to FIG. 6, the catalyst retaining unit 130 may have a shape of a structure 134 which contains a SO₂ gas oxidation catalyst as a component. For example, the catalyst retaining unit 130 may be a structure containing V₂O₅ as a component. The structure 134 containing such a SO₂ gas oxidation catalyst as a component may be implemented in various ways. For example, after coating glass fibers with filler and drying and thermally treating the same to form a structure, a SO₂ gas oxidation catalyst may be supported by the structure by means of a binder.

As described above, in a case where the catalyst retaining unit 130 has a form of the structure 134 containing the SO₂ gas oxidation catalyst as a component, the structure 134 may be implemented in a honeycomb (hive) type or a plate type. In addition, the structure 134 may be implemented in a pellet type such as cylinders and rings.

However, the present disclosure is not limited to such a specific forming method or type of the structure 134, and the structure 134 containing the SO₂ gas oxidation catalyst as a component may be implemented by various structure manufacturing methods or in various structural types, well known in the art at the filing of the present disclosure.

Meanwhile, as shown in FIG. 6, the structure 134 containing the SO₂ gas oxidation catalyst as a component may be located at the inside of the annealing furnace 20 of the glass manufacturing apparatus. In this case, even though the apparatus for forming a lubricant layer on the surface of a glass according to the present disclosure is included thereon, the size of the annealing furnace 20 does not substantially increase, and the internal heat of the annealing furnace 20 may be utilized.

The annealing furnace 20 of the glass manufacturing apparatus according to the present disclosure includes the apparatus for forming a lubricant layer on the surface of a glass as described above. For example, the annealing furnace 20 according to an embodiment of the present disclosure includes the apparatus for forming a lubricant layer on the surface of a glass as shown in FIGS. 3 to 6. If the annealing furnace 20 of the glass manufacturing apparatus according to the present disclosure is used, since the apparatus for forming a lubricant layer on the surface of a glass, included therein, may rapidly and sufficiently form a lubricant layer at the surface of a glass, particularly at the lower surface of the glass, it is possible to prevent scratches from occurring at the lower surface of the glass due to transfer means such as the roller 30 of the annealing furnace 20 or a roller after the annealing furnace 20.

Preferably, the apparatus for forming a lubricant layer on the surface of a glass is provided at the inlet 21 of the annealing furnace. Since the inlet 21 of the annealing furnace has a higher temperature than the outlet 22, the oxidation of SO₂ gas and the formation of sulphate by SO₃ gas may be promoted. In addition, since the sulphate lubricant layer is formed at the surface of the glass before the location of the roller 30 provided at the annealing furnace 20, it is possible to prevent the lower surface of the glass from being damaged at an earlier stage.

In addition, the glass manufacturing apparatus according to the present disclosure includes the apparatus for forming a lubricant layer on the surface of a glass. Therefore, if the glass manufacturing apparatus according to the present disclosure is used, the damage of the lower surface of a glass, which may occur during a glass transferring process in the glass manufacturing method, may be effectively prevented.

Hereinafter, the present disclosure will be described in more detail based on examples and comparative examples. The embodiments of the present disclosure, however, may take several other forms, and the scope of the present disclosure should not be construed as being limited to the following examples. The embodiments of the present disclosure are provided to more fully explain the present disclosure to those having ordinary knowledge in the art to which the present disclosure pertains.

First, the examples and the comparative examples will be compared to look into the effect of promoting the formation of a sulphate lubricant layer at the surface of a glass, in a case where a SO₂ gas oxidation catalyst is supplied together with SO₂ gas as in the present disclosure.

### Example 1

FIG. 7 is a schematic diagram showing a device for supplying SO₂ gas and an SO₂ gas oxidation catalyst to a glass plate to cause an oxidation reaction of the SO₂ gas at the surface of the glass plate according to an embodiment of the present disclosure.

As an example according to the present disclosure, as shown in FIG. 7, a glass plate for LCD with a size of 15x15 mm was prepared and sealed with an O-ring. After that, the glass plate was put into a quartz tube furnace 40 of 750°C, and SO₂ gas and O₂ gas were supplied thereto to make an environment of SO₂ 5%, O₂ 10%. In addition, V₂O₅ powder was placed on the supply path of the SO₂ gas and the O₂ gas so that the V₂O₅ powder served as a SO₂ gas oxidation catalyst. In addition, this state was maintained for 60 minutes so that the reactions of Formulas 1 and 2 occur in the tube furnace 40.

And then, the tube furnace 40 was sufficiently cooled and all reaction gases were exhausted out of the tube furnace 40 by using nitrogen gas.

After that, the IC (Ion Chromatography) analysis was performed to the glass plate of Example 1. The analysis results are shown in Table 1 below. Here, the IC analysis is an analysis method for comparing the degree of sulphate such as CaSO₄ formed at the surface of the glass plate as a lubricant layer. For the IC analysis, each glass plate was put into 10mg DI water and maintained at 60°C for 10 minutes so that CaSO₄ at the surface of the glass plate is dissolved in the DI water, and the IC analysis was performed to the solution. At this time, the dissolution of CaSO₄ was checked by performing an ESCA analysis before or after the IC analysis.

### Comparative Example 1

As a comparative example to be compared with Example 1, a glass plate for LCD with a size of 15x15 mm was sealed with an O-ring and then put into a tube furnace 40 of 750°C, and SO₂ gas and O₂ gas were supplied thereto to make an environment of SO₂ 5%, O₂ 10%, similar to Example 1. However, V₂O₅ powder was not supplied, different from Example 1. In addition, this state was maintained for 60 minutes so that the reactions of Formulas 1 and 2 occur. After the glass plate of Comparative Example 1 was reacted, the tube furnace 40 was cooled and all reaction gases were exhausted out of the tube furnace 40 by using nitrogen gas.

After that, the IC analysis was performed to the glass plate of Comparative Example 1, similar to Example 1. The analysis results are shown in Table 1 below.

**Table 1**

| | SO₂ (%) | O₂ (%) | Reaction time (min) | Temp. (°C) | V₂O₅ | IC analysis (ppm) |
|---|---|---|---|---|---|---|
| Example 1 | 5 | 10 | 60 | 750 | Used | 8.70 |
| Comparative Example 1 | | | | | X | 1.10 |

Referring to Table 1, in case of Example 1 using V₂O₅ as a SO₂ gas oxidation catalyst together with SO₂ gas and O₂ gas, the IC analysis result was 8.70ppm. Meanwhile, in case of Comparative Example 1 where V₂O₅ was not used and only SO₂ gas and O₂ gas were supplied to the glass, the IC analysis result was 1.10ppm. From the results, it may be understood that CaSO₄ serving as a lubricant layer is formed much more on the surface of the glass plate in the case where V₂O₅ serving as a SO₂ gas oxidation catalyst is used together with SO₂ gas.

Therefore, it could be understood that, when forming a sulphate lubricant layer at the surface of a glass by using SO₂ gas, if the SO₂ gas oxidation catalyst such as V₂O₅ is used as in the present disclosure, the lubricant layer may be formed more easily.

Hereinafter, in a case where the apparatus for forming a lubricant layer on the surface of a glass according to a detailed embodiment of the present disclosure is provided to the annealing furnace, the effect of promoting the formation of a sulphate lubricant layer at the surface of a glass annealed in an annealing furnace will be discussed.

### Example 2

As an example according to the present disclosure, as shown in FIG. 3, the apparatus for forming a lubricant layer on the surface of a glass, which contains V₂O₅, received SO₂ gas and O₂ gas, generated SO₃ gas, and supplied the SO₃ gas to the annealing furnace where a glass was annealed. At this time, the apparatus for forming a lubricant layer on the surface of a glass received the SO₂ gas at a flow rate of 6 Nm³/Hr and received the O₂ gas at a flow rate of 3 Nm³/Hr. After that, with respect to an annealed glass plate with a predetermined size, the IC analysis was performed to simulate a forming rate of sulphate, similar to Example 1. The analysis results are shown in FIG. 8. In other words, FIG. 8 is a diagram showing rates of forming a sulphate lubricant layer (MSO₄) at a glass plate in an annealing furnace with different colors in a case where SO₃ gas is supplied to the annealing furnace by the apparatus for forming a lubricant layer on the surface of a glass according to an embodiment of the present disclosure. In FIG. 8, the left side represents a direction toward the inlet of the annealing furnace and the right side represents a direction toward the outlet of the annealing furnace. In addition, the apparatus for forming a lubricant layer on the surface of a glass supplied SO₃ gas near the inlet of the annealing furnace. Moreover, an amount of a sulphate lubricant layer formed on the entire glass plate with a predetermined size according to Example 2 is shown in Table 2 below.

### Comparative Example 2

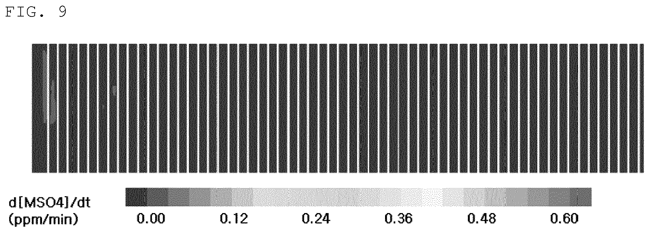

As a comparative example to be compared with Example 2, a glass having the same kind and size as that of Example 2 was annealed in the same annealing furnace as in Example 2. The annealing furnace did not include the apparatus for forming a lubricant layer, shown in FIG. 3, and SO₂ gas and O₂ gas were directly supplied to the annealing furnace. At this time, SO₂ gas was supplied to the annealing furnace at a flow rate of 6 Nm³/Hr, and O₂ gas contained in the air was supplied to the annealing furnace at a flow rate of 800 Nm³/Hr. After that, with respect to a glass plate annealed in the annealing furnace, the IC analysis was performed to simulate a forming rate of sulphate. The analysis results are shown in FIG. 9. In other words, FIG. 9 is a diagram showing rates of forming a sulphate lubricant layer at a glass plate in an annealing furnace with different colors in a case where SO₃ gas is supplied directly to the annealing furnace according to a comparative example of the present disclosure. In FIG. 9, the left side represents a direction toward the inlet of the annealing furnace and the right side represents a direction toward the outlet of the annealing furnace, similar to FIG. 8. In addition, SO₂ gas and air were supplied from the inlet of the annealing furnace. Moreover, an amount of a sulphate lubricant layer formed on the entire glass plate according to Comparative Example 2 with the same size as in Example 2 is shown in Table 2 below.

**Table 2**

| | SO₂ | O₂ | IC analysis (ppm) |
|---|---|---|---|
| Example 2 | 6 Nm³/Hr | 3 Nm³/Hr | 0.725 |
| Comparative Example 2 | 6 Nm³/Hr | 800 Nm³/Hr (Air) | 0.082 |

First, referring to FIG. 9 according to Comparative Example 2, a blue color is generally shown except for a portion near the inlet of the annealing where SO₂ gas and air are supplied, namely a left portion on the drawing. This means that a forming rate (d[MSO₄]/dt) of the sulphate lubricant layer at the surface of the glass plate is substantially close to 0 (zero) in the annealing furnace. Therefore, it may be understood that a sulphate lubricant layer is substantially not formed at the surface of the glass in the entire annealing furnace. Meanwhile, referring to FIG. 8 according to Example 2 of the present disclosure, the annealing furnace shows a light blue color close to a green color as a whole rather than a dark blue color. This means that the forming rate of the sulphate lubricant layer at the surface of the glass plate is in the range of 0.1 to 0.3 ppm/min in the annealing furnace. Therefore, it may be understood that the sulphate lubricant layer is actively formed at the surface of the glass in the entire annealing furnace. Particularly, a portion near the inlet of the annealing furnace where SO₃ gas is supplied, namely a left portion on the drawing, shows red and yellow colors, and so it may be understood that the forming rate of the sulphate lubricant layer is in the range of 0.4 to 0.6 ppm/min. From the above results, in a case where the apparatus for forming a lubricant layer on the surface of a glass according to the present disclosure supplies SO₃ gas into the annealing furnace, it may be understood that the sulphate lubricant layer may be effectively formed at the surface of a glass in comparison to a conventional technique where SO₂ gas and air are supplied into annealing furnace.

In addition, referring to FIG. 2, in Example 2, the entire amount of generated sulphate according to the IC analysis results is 0.725 ppm, but in Comparative Example 2, the entire amount of generated sulphate according to the IC analysis results is 0.082 ppm. From this, in a case where the apparatus for forming a lubricant layer on the surface of a glass according to the present disclosure, which retains V₂O₅ to promote oxidation of SO₂ gas and supplies the generated SO₃ gas to the annealing furnace as shown in FIG. 3 is included in the annealing furnace, it may be understood that the formation of a lubricant layer by sulphate at the surface of a glass, which is to be annealed, is further promoted.

## Claims

1. Use of an apparatus for forming a lubricant layer on the surface of a non-alkali glass, the apparatus comprising:
a SO₂ supply unit for supplying SO₂ gas;
a O₂ supply unit for supplying O₂ gas;
a catalyst retaining unit for retaining a SO₂ gas oxidation catalyst, the catalyst retaining unit receiving SO₂ gas and O₂ gas from the SO₂ supply unit and the O₂ supply unit to generate SO₃ gas and supplying the generated SO₃ gas to the non-alkali glass and forming a CaSO₄ lubricant layer at the surface of the non-alkali glass, the catalyst retaining unit having a cylindrical shape with an inlet and an outlet and retaining the SO₂ gas oxidation catalyst therein so that SO₂ gas and O₂ gas flow into the catalyst retaining unit through the inlet and SO₃ gas flows out of the catalyst retaining unit through the outlet; and
wherein a filter is provided to the outlet of the catalyst retaining unit so that the SO₂ gas oxidation catalyst does not pass therethrough,
wherein the SO₂ gas oxidation catalyst is retained in the catalyst retaining unit in at least one form of a pellet form and a powder form.

2. Use according to claim 1, wherein the SO₂ gas oxidation catalyst includes at least one of V₂O₅, Fe₂O₃, CuO, TiO₂, Cr₂O₃, SiO₂, CaO, Al₂O₃ and WO₃.

3. Use according to claim 2, wherein the catalyst retaining unit further retains at least one of K₂O, K₂SO₄ and K₂S₂O₇.

4. Use according to claim 1, wherein the catalyst retaining unit is heated to a predetermined temperature.

5. Use according to claim 1, wherein the SO₂ gas and the O₂ gas are supplied in a heated state to the catalyst retaining unit.

6. Use according to claim 1, wherein the catalyst retaining unit is located out of an annealing furnace of a non-alkali glass manufacturing apparatus, and the outlet of the catalyst retaining unit is connected to the inside of the annealing furnace.

7. Use according to claim 6, the SO₃ gas flowing out from the outlet of the catalyst retaining unit is maintained over a predetermined temperature.

8. Use according to claim 1, wherein the catalyst retaining unit is located in an annealing furnace of a non-alkali glass manufacturing apparatus.

9. Use according to claim 1, wherein a plurality of the catalyst retaining units is provided, and at least two catalyst retaining units retain different kinds of SO₂ gas oxidation catalysts.

10. Use according to claim 1, wherein the catalyst retaining unit supplies the SO₃ gas at a flow rate of 0.05 Nm³/Hr to 10 Nm³/Hr.

11. Use according to claim 1,
wherein the SO₂ supply unit supplies the SO₂ gas at a flow rate of 0.05 Nm³/Hr to 10 Nm³/Hr, and
wherein the O₂ supply unit supplies the O₂ gas at a flow rate of 0.05 Nm³/Hr to 10 Nm³/Hr.

12. Use of an annealing furnace of a non-alkali glass manufacturing apparatus, which includes the apparatus as described in claim 1 for forming a lubricant layer on the surface of a non-alkali glass.

13. Use of a non-alkali glass manufacturing apparatus, which includes the apparatus as described in claim 1 for forming a lubricant layer on the surface of a non-alkali glass.

## Patentansprüche

1. Verwendung einer Vorrichtung zum Bilden einer Schmiermittelschicht auf der Oberfläche eines nicht alkalischen Glases, die Vorrichtung umfassend:
eine SO₂-Zuführeinheit zum Zuführen von SO₂-Gas;
eine O₂-Zuführeinheit zum Zuführen von 02-Gas;
eine Einheit zum Zurückhalten eines Katalysators zum Zurückhalten eines Katalysators zum Oxidieren von SO₂-Gas, wobei die Einheit zum Zurückhalten des Katalysators SO₂-Gas und 02-Gas aus der SO₂-Zuführeinheit und der 02-Zuführeinheit empfängt, um SO₃-Gas zu erzeugen, und das erzeugte SO₂-Gas dem nicht alkalischen Glas zuführt und eine CaSO₄-Schmiermittelschicht an der Oberfläche des nicht alkalischen Glases bildet, wobei die Einheit zum Zurückhalten des Katalysators eine zylindrische Form mit einem Einlass und einem Auslass hat und der Katalysator zum Oxidieren von SO₂-Gas darin zurückgehalten wird, so dass SO₂-Gas und 02-Gas in die Einheit zum Zurückhalten des Katalysators durch den Einlass fließen und das SO₃-Gas aus der Einheit zum Zurückhalten des Katalysators durch den Auslass hinausfließt; und
wobei ein Filter am Auslass der Einheit zum Zurückhalten des Katalysators bereitgestellt ist, so dass der Katalysator zum Oxidieren des SO₂-Gases nicht hierdurch gelangen kann,
wobei der Katalysator zum Oxidieren von SO₂-Gas in der Einheit zum Zurückhalten des Katalysators in zumindest einer Form einer Pelletform oder einer Pulverform zurückgehalten wird.

2. Verwendung nach Anspruch 1, wobei der Katalysator zum Oxidieren von SO₂-Gas zumindest eines von V₂O₅, Fe₂O₃, CuO, TiO₂, Cr₂O₃, SiO₂, CaO, Al₂O₃ und WO₃ umfasst.

3. Verwendung nach Anspruch 2, wobei die Einheit zum Zurückhalten des Katalysators ferner zumindest eines von K20, K₂SO₄ und K₂S₂O₇ zurückhält.

4. Verwendung nach Anspruch 1, wobei die Einheit zum Zurückhalten des Katalysators auf eine vorbestimmte Temperatur erhitzt wird.

5. Verwendung nach Anspruch 1, wobei das SO₂-Gas und das O₂-Gas in einem erhitzten Zustand in die Einheit zum Zurückhalten des Katalysators zugeführt werden.

6. Verwendung nach Anspruch 1, wobei die Einheit zum Zurückhalten des Katalysators außerhalb eines Glühofens einer Vorrichtung zum Herstellen eines nicht alkalischen Glases angeordnet ist und der Auslass der Einheit zum Zurückhalten des Katalysators mit dem Inneren des Glühofens verbunden ist.

7. Verwendung nach Anspruch 6, wobei das SO₃-Gas, das aus dem Auslass der Einheit zum Zurückhalten des Katalysators hinausfließt, über einer vorbestimmten Temperatur gehalten wird.

8. Verwendung nach Anspruch 1, wobei die Einheit zum Zurückhalten des Katalysators in einem Glühofen einer Vorrichtung zum Herstellen eines nicht alkalischen Glases angeordnet ist.

9. Verwendung nach Anspruch 1, wobei eine Vielzahl von Einheiten zum Zurückhalten des Katalysators bereitgestellt wird und zumindest zwei der Einheiten zum Zurückhalten des Katalysators verschiedene Arten von Katalysatoren zum Oxidieren von SO₂-Gas zurückhalten.

10. Verwendung nach Anspruch 1, wobei die Einheit zum Zurückhalten des Katalysators das SO₃-Gas mit einer Flussrate von 0,05 Nm³/Hr bis 10 Nm³/Hr zuführt.

11. Verwendung nach Anspruch 1,
wobei die SO₂-Zuführeinheit SO₂-Gas mit einer Flussrate von 0,05 Nm³/Hr bis 10 Nm³/Hr zuführt, und
wobei die O₂-Zuführeinheit O₂-Gas mit einer Flussrate von 0,05 Nm³/Hr bis 10 Nm³/Hr zuführt.

12. Verwendung eines Glühofens einer Vorrichtung zum Herstellen von nicht alkalischem Glas, die die Vorrichtung nach Anspruch 1, umfasst, zum Bilden einer Schmiermittelschicht auf der Oberfläche eines nicht alkalischen Glases.

13. Verwendung einer Vorrichtung zum Herstellen eines nicht alkalischen Glases, die die Vorrichtung nach Anspruch 1 umfasst, zum Bilden einer Schmiermittelschicht auf der Oberfläche eines nicht alkalischen Glases.

## Revendications

1. Utilisation d'un appareil servant à former une couche de lubrification sur une surface de verre non alcalin, l'appareil comportant:
une unité d'alimentation de SO₂ qui sert à alimenter le SO₂ gazeux;
une unité d'alimentation de O₂ qui sert à alimenter le O₂ gazeux;
une unité de retenue du catalyseur qui sert à retenir un catalyseur d'oxydation du SO₂ gazeux, l'unité de retenue du catalyseur recevant le SO₂ gazeux et le O₂ gazeux en provenance de l'unité d'alimentation de SO₂ et de l'unité d'alimentation de O₂ afin de produire du SO₃ gazeux et fournir le SO₃ gazeux produit au verre non alcalin et former une couche de lubrification de CaSO₄ à la surface du verre non alcalin, l'unité de retenue du catalyseur étant de forme cylindrique comportant une arrivée et une sortie et retenant le catalyseur d'oxydation du SO₂ gazeux à l'intérieur de l'unité, de sorte que le SO₂ gazeux et le O₂ gazeux s'écoulent dans l'unité de retenue du catalyseur en passant par l'arrivée et que le SO₃ gazeux sorte de l'unité de retenue du catalyseur en passant par la sortie; et
**caractérisée en ce qu'**il est prévu un filtre à la sortie de l'unité de retenue du catalyseur afin d'empêcher le catalyseur d'oxydation du SO₂ gazeux de la traverser,
**caractérisée en ce que** le catalyseur d'oxydation du SO₂ gazeux est retenu dans l'unité de retenue du catalyseur au moins sous forme de boulettes ou de poudre.

2. Utilisation selon la revendication 1, **caractérisée en ce que** le catalyseur d'oxydation du SO₂ gazeux comprend au moins l'un des produits suivants: V₂O₅, Fe₂O₃, CuO, TiO₂, Cr₂O₃, SiO₂, CaO, Al₂O₃ et WO₃.

3. Utilisation selon la revendication 2, **caractérisée en ce que** l'unité de retenue du catalyseur retient par ailleurs au moins l'un des produits suivants: K₂O, K₂SO₄, et K₂S₂O₇.

4. Utilisation selon la revendication 1, **caractérisée en ce que** l'unité de retenue du catalyseur est chauffée à une température prédéterminée.

5. Utilisation selon la revendication 1, **caractérisée en ce que** le SO₂ gazeux et le O₂ gazeux sont fournis à l'état chauffé à l'unité de retenue du catalyseur.

6. Utilisation selon la revendication 1, **caractérisée en ce que** l'unité de retenue du catalyseur se trouve à l'extérieur du four à recuire d'un appareil de fabrication de verre non alcalin, et **en ce que** la sortie de l'unité de retenue du catalyseur est raccordée à l'intérieur du four à recuire.

7. Utilisation selon la revendication 6, **caractérisée en ce que** le SO₃ gazeux qui s'écoule hors de la sortie de l'unité de retenue du catalyseur est maintenu à une température prédéterminée.

8. Utilisation selon la revendication 1, **caractérisée en ce que** l'unité de retenue du catalyseur se trouve dans un four à recuire d'un appareil de fabrication de verre non alcalin.

9. Utilisation selon la revendication 1, **caractérisée en ce qu'**il est prévu une pluralité d'unités de retenue du catalyseur, et **en ce qu'**au moins deux unités de retenue du catalyseur retiennent des catalyseurs d'oxydation au SO₂ gazeux de types différents

10. Utilisation selon la revendication 1, **caractérisée en ce que** l'unité de retenue du catalyseur alimente le SO₃ gazeux à un débit compris entre 0,05 Nm³/Hr et 10 Nm³/Hr.

11. Utilisation selon la revendication 1,
**caractérisée en ce que** l'unité d'alimentation de SO₂ alimente le SO₂ gazeux à un débit compris entre 0,05 Nm³/Hr et 10 Nm³/Hr, et
**caractérisée en ce que** l'unité d'alimentation de O₂ alimente le O₂ gazeux à un débit compris entre 0,05 Nm³/Hr et 10 Nm³/Hr.

12. Utilisation d'un four à recuire dans un appareil de fabrication de verre non alcalin qui comprend l'appareil décrit dans la revendication 1 et servant à former une couche de lubrification sur une surface de verre non alcalin.

13. Utilisation d'un appareil de fabrication de verre non alcalin qui comprend l'appareil décrit dans la revendication 1 et servant à former une couche de lubrification sur une surface de verre non alcalin.
